# EUROPEAN PATENT APPLICATION

(11) **EP 2 690 916 A1**
(43) Date of publication of application: **29.01.2014**
(21) Application number: 12760799.2
(22) Date of filing: 23.03.2012
(51) Int. Cl.: H04W 60/04, H04W 8/26, H04W 76/02

(54) **MOBILE COMMUNICATION METHOD**

(30) Priority: 24.03.2011 JP 2011066092
(71) Applicant: NTT DOCOMO, INC., Chiyoda-ku Tokyo 100-6150 (JP)
(72) Inventor: NISHIDA, Katsutoshi, Tokyo 100-6150 (JP); SUZUKI, Keisuke, Tokyo 100-6150 (JP)
(74) Representative: HOFFMANN EITLE
(86) International application number: PCT/JP2012/057533
(87) International publication number: WO 2012/128355

(57) **Abstract**

A mobile communication method according to an embodiment of the invention includes: a step A of causing a S-GW#2 to send "Downlink Data Pending" to a MME in a procedure for the S-GW#2 to establish a user data bearer for the UE with a P-GW; a step B of causing the MME to send an "Initial Context Setup Request" for requesting establishment of an S1 bearer/E-RAB for the UE between the S-GW#2 and an eNB under the control of the S-GW#2 while holding a NAS signaling connection established with the UE without releasing the NAS signaling connection, when the MME receives the "Downlink Data Pending"; and a step C of causing the S-GW#2 to send the "RA" to the UE via the S1 bearer/E-RAB for the UE.

## Description

### TECHNICAL FIELD

The present invention relates to a mobile communication method.

### BACKGROUND ART

An EPC (Evolved Packet Core) network employing the GTP (GPRS Tunneling Protocol) described in Non-patent document 1 is configured such that a P-GW (PDN-Gateway, packet data network gateway) notifies a UE (User Equipment, mobile station) of an "RA (Router Advertisement, router notification signal)".

An "RA" includes "IPv6 Prefix" to be allocated to the UE, "router lifetime" indicating a period of time during which the "IPv6 Prefix" is valid, and "default gateway information (packet forwarding information)".

The UE is configured to receive an "RA" regularly and thereby update the validity of an IPv6 address held by the UE itself.

Specifically, the UE is configured such that, when receiving an "RA", it sets a "Router lifetime (predefined timer)" based on the "router lifetime" included in the "RA", and holds the "default gateway information" included in the "RA".

Here, the UE is configured such that, if receiving an "RA" before the "Router lifetime" expires, it updates the validity of the IPv6 address and "default gateway information" held by itself based on the received "RA".

On the other hand, the UE is configured to delete the "default gateway information" held by itself if judging that the IPv6 address held by itself is invalid, that is, if receiving no "RA" before the "Router lifetime" expires.

In other words, the UE is configured to hold the "default gateway information" until the "Router lifetime (e.g., 18 hours) " notified in the "RA" expires, and to delete the "default gateway information" after the "Router lifetime" expires.

Here, the "Router lifetime" is a timer held by the UE, and a period of time three times the value of a "MaxRtrAdvInterval (network-side timer)" is defined as its default value (see Non-patent document 2, for example).

Meanwhile, the "MaxRtrAdvInterval" is a timer (maximum RA transmission interval) held by the P-GW to which the mobile station UE is connected, and "21600 seconds (6 hours)" is defined as its default value (see Non-patent document 3, for example).

In a similar way, an EPC network employing the PMIP (Proxy Mobile IP) described in Non-patent document 4 is configured such that an S-GW (Serving Gateway) notifies a UE of an "RA".

Here, a "MaxRtrAdvInterval" is a timer (maximum RA transmission interval) held by the S-GW to which the mobile station UE is connected, and "21600 seconds (6 hours)" is defined as its default value (see Non-patent document 3, for example).

In addition, the EPC network employing the PMIP is configured such that the TAU (Tracking Area Update) procedure, the RAU (Routing Area Update) procedure, and the HO (Handover) procedure are performed with the movement of the UE and, in the case where the S-GW for managing a bearer for the UE is changed from a S-GW#1 to a S-GW#2, the S-GW#2 can send an "RA" to the UE.

### PRIOR ART DOCUMENT

### NON-PATENT DOCUMENT

Non-patent document 1: 3GPP TS23.401
Non-patent document 2: RFC4861 6.2.1
Non-patent document 3: 3GPP TS29.061
Non-patent document 4: 3GPP TS23.402

### SUMMARY OF THE INVENTION

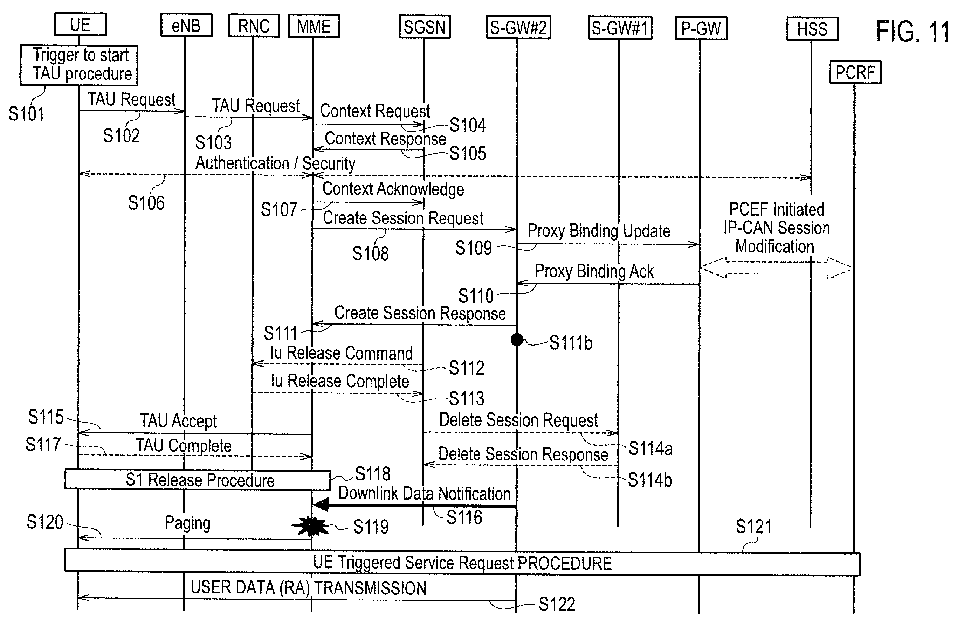

Fig. 11 shows an operation of sending an "RA" to the UE in the location registration procedure, which involves the change of the S-GW for managing a bearer for the UE from the S-GW#1 to the S-GW#2, in the case where a radio access network (RAT: Radio Access Technology) to which the UE is connected is changed from the UTRAN (Universal Terrestrial Radio Access Network) to the E-UTRAN (Evolved Universal Terrestrial Radio Access Network).

As shown in Fig. 11, a MME receives a "Create Session Response" from the S-GW in Step S111. Then, after the MME sends a "TAU Accept" to the UE in Step S115, or after the MME receives a "TAU Complete" from the UE in Step S117, a NAS signaling connection established between the MME and the UE is released in Step S118.

Meanwhile, the S-GW#2 starts the "RA" transmission procedure in Step S111b. Since no S1 bearer/E-RAB (EUTRAN-Radio Access Bearer) for the UE is established with an eNB under the control of the S-GW#2, the S-GW#2 sends the MME a "Downlink Data Notification (downlink data notification signal)" for notifying of "RA" transmission in Step S116.

The MME detects that no NAS signaling connection is established between the MME and the UE in Step S119 when receiving the "Downlink Data Notification", and sends a "Paging (paging signal)" to the UE in Step S120.

In other words, the conventional mobile communication system is configured to release a NAS signaling connection for the UE once, and then establish a NAS signaling connection for the UE again by sending a "Paging" to establish an S1 bearer/E-RAB required for "RA" forwarding, in the case of transmission of an "RA" to the UE triggered by access from the UE, e.g., in the case of transmission of an "RA" to the UE triggered by the location registration procedure involving the change of the S-GW for managing a bearer for the UE.

Thus, there is a problem that the transmission of an "RA" to the UE triggered by access from the UE induces a "Paging", and hence the transmission of an "RA" cannot be performed efficiently.

The present invention has been therefore made in view of the above problem. An objective of the present invention is to provide a mobile communication method capable of preventing a "Paging" from being induced in the case of transmission of an "RA" to a UE triggered by access from the UE and thereby performing effective "RA" transmission.

A first characteristic of the present invention is a mobile communication method for sending a mobile station a notification signal for notifying of information on an IP address to be allocated to the mobile station in a location registration procedure involving a change of a serving gateway for managing a bearer for the mobile station from a first serving gateway to a second serving gateway. The gist of the mobile communication method is to include: a step A of causing the second serving gateway to send predetermined information to a core network device connected to the second serving gateway in a procedure for the second serving gateway to establish a first user bearer for the mobile station with a packet data network gateway; a step B of causing the core network device to send an establishment request signal for requesting establishment of a second user bearer for the mobile station between the second serving gateway and a radio access network device under the control of the second serving gateway while holding a control bearer established with the mobile station without releasing the control bearer, when the core network device receives the predetermined information; and a step C of causing the second serving gateway to send the notification signal to the mobile station via the second user bearer.

A second characteristic of the present invention is a mobile communication method for sending a mobile station a notification signal for notifying of information on an IP address to be allocated to the mobile station in a location registration procedure involving a change of a serving gateway for managing a bearer for the mobile station from a first serving gateway to a second serving gateway. The gist of the mobile communication method is to include: a step A of causing the second serving gateway to send predetermined information to a core network device connected to the second serving gateway in a procedure for the second serving gateway to establish a first user bearer for the mobile station with a packet data network gateway; a step B of causing the core network device to hold a control bearer established with the mobile station without releasing the control bearer when receiving the predetermined information; a step C of causing the second serving gateway to send a downlink data notification signal to the core network device if no second user bearer for the mobile station is established between the second serving gateway and a radio access network device under the control of the second serving gateway; a step D of causing the core network device to send an establishment request signal for requesting establishment of the second user bearer when receiving the downlink data notification signal; and a step E of causing the second serving gateway to send the notification signal to the mobile station via the second user bearer.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a sequence diagram showing an operation of the mobile communication system according to the first embodiment of the present invention.
[Fig. 3] Fig. 3 is a sequence diagram showing the operation of the mobile communication system according to the first embodiment of the present invention.
[Fig. 4] Fig. 4 is a sequence diagram showing the operation of the mobile communication system according to the first embodiment of the present invention.
[Fig. 5] Fig. 5 is a sequence diagram showing an operation of a mobile communication system according to a first modification of the present invention.
[Fig. 6] Fig. 6 is a sequence diagram showing an operation of a mobile communication system according to a second modification of the present invention.
[Fig. 7] Fig. 7 is a sequence diagram showing the operation of the mobile communication system according to the second modification of the present invention.
[Fig. 8] Fig. 8 is a sequence diagram showing an operation of a mobile communication system according to a third modification of the present invention.
[Fig. 9] Fig. 9 is a sequence diagram showing an operation of a mobile communication system according to a fourth modification of the present invention.
[Fig. 10] Fig. 10 is a sequence diagram showing an operation of a mobile communication system according to a fifth modification of the present invention.
[Fig. 11] Fig. 11 is a sequence diagram showing an operation of a conventional mobile communication system.

### MODE FOR CARRYING OUT THE INVENTION

### (Mobile Communication System according to First Embodiment of Present Invention)

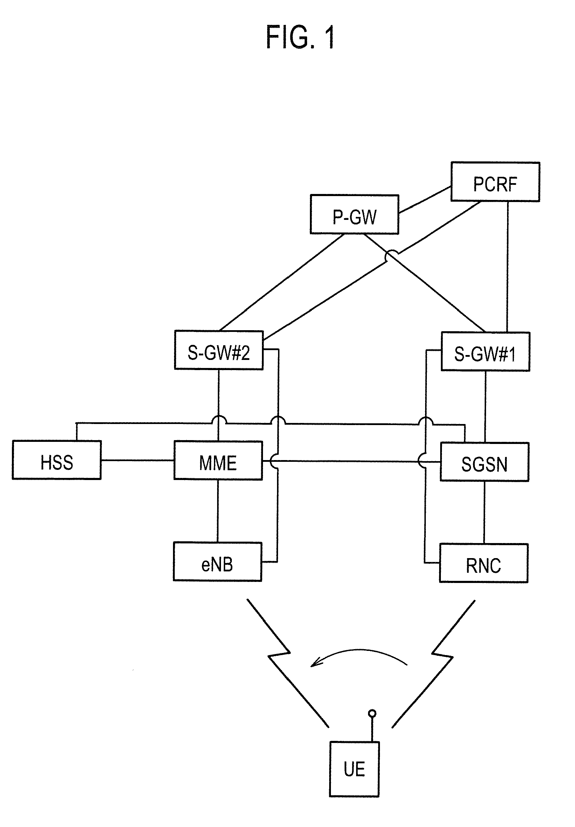

A mobile communication system according to a first embodiment of the present invention will be described with reference to Figs. 1 to 4.

As shown in Fig. 1, the mobile communication system according to this embodiment includes: a RNC (radio network controller) which is a radio access network device in the UTRAN/GERAN (GSM EDGE Radio Access Network); a SGSN (Serving GPRS Support Node, packet switch) which is a core network device; an eNB (radio base station) which is a radio access network device in the E-UTRAN; a MME (Mobility Management Entity, mobility management node) which is a core network device; a S-GW#1; a S-GW#2; a P-GW; a HSS (Home Subscriber Server, subscriber management server); a PCRF (Policy and Charging Rules Function); and the like.

Note that, in the mobile communication system according to this embodiment, the PMIP is employed in the S-GW#2 and the P-GW.

Hereinbelow, this embodiment will be described while taking an example of a case of sending an "RA" to the UE in the location registration procedure, which involves the change of the S-GW for managing a bearer for the UE from the S-GW#1 to the S-GW#2, in the case where a radio access network to which the UE is connected is changed from the UTRAN to the E-UTRAN. However, the present invention is not limited to this case. The present invention is applicable to various cases including: a case of sending an "RA" to the UE in the location registration procedure, which involves the change of the S-GW for managing a bearer for the UE, in the case where the radio access network to which the UE is connected is changed from the E-UTRAN to the UTRAN; and a case of sending an "RA" to the UE in the various procedures (such as the TAU procedure/RAU procedure/HO procedure), which involve the change of the S-GW for managing a bearer for the UE, inside the UTRAN or inside the E-UTRAN.

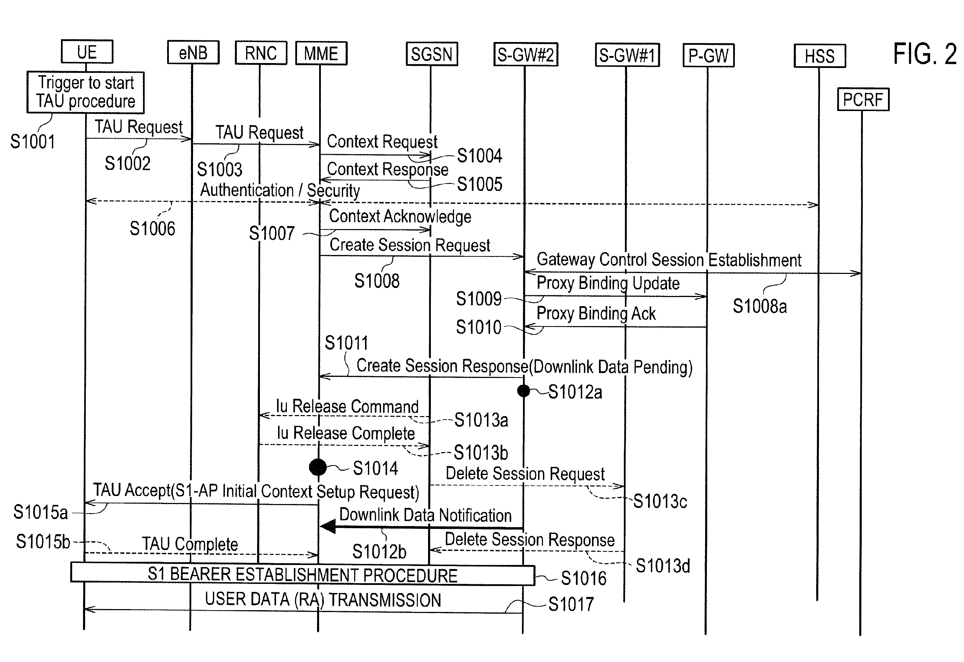

With reference to Figs. 2 to 4, a description will be given below of an operation of sending an "RA" to the UE in the location registration procedure, which involves the change of the S-GW for managing a bearer for the UE from the S-GW#1 to the S-GW#2, in the mobile communication system according to this embodiment.

As shown in Fig. 2, upon determining to start the TAU procedure in Step S1001, the UE sends a "TAU Request" to the eNB in Step S1002.

In Step S1003, the eNB sends a "TAU Request" to the MME.

In Step S1004, the MME sends a "Context Request" to the SGSN. In Step S1005, the SGSN sends a "Context Response" to the MME.

In Step S1006, the "Authentication/Security procedure" is performed among the UE, the MME, and the HSS as needed.

In Step S1007, the MME sends a "Context Acknowledge" to the SGSN. Then, in Step S1008, the MME sends the S-GW#2 a "Create Session Request" for requesting establishment of a user data bearer for the UE between the S-GW#2 and the P-GW.

In Step S1008a, the "Gateway Control Session Establishment procedure" is performed between the S-GW#2 and the PCRF.

In Step S1009, the S-GW#2 sends a "Proxy Binding Update" to the P-GW. In Step S1010, the P-GW sends a "Proxy Binding Ack" to the S-GW#2.

The S-GW#2 sends a "Create Session Response" including "Downlink Data Pending (predefined information) " in Step S1011, and then starts the "RA" transmission procedure in Step S1012a.

Here, the "Downlink Data Pending" may be information for explicitly notifying of "RA" transmission, or instead may be information indicating the existence of downlink data.

In Step S1013a, the SGSN sends an "Iu Release Command" to the RNC. In Step 1013b, the RNC sends an "Iu Release Complete" to the SGSN.

In Step S1013c, the SGSN sends a "Delete Session Request" to the S-GW#1. In Step S1013d, the S-GW#1 sends a "Delete Session Response" to the SGSN.

In response to the receipt of the "'Downlink Data Pending", the MME determines to establish an S1 bearer/E-RAB for the UE in Step S1014.

In Step S1015a, the MME sends the UE an "S1-AP Initial Context Setup Request" including a "TAU Accept" while holding a NAS signaling connection established with the UE without releasing the NAS signaling connection.

Here, the "S1-AP Initial Context Setup Request" is a signal for requesting establishment of an S1 bearer/E-RAB for the UE between the S-GW#2 and the eNB under the control of the S-GW#2.

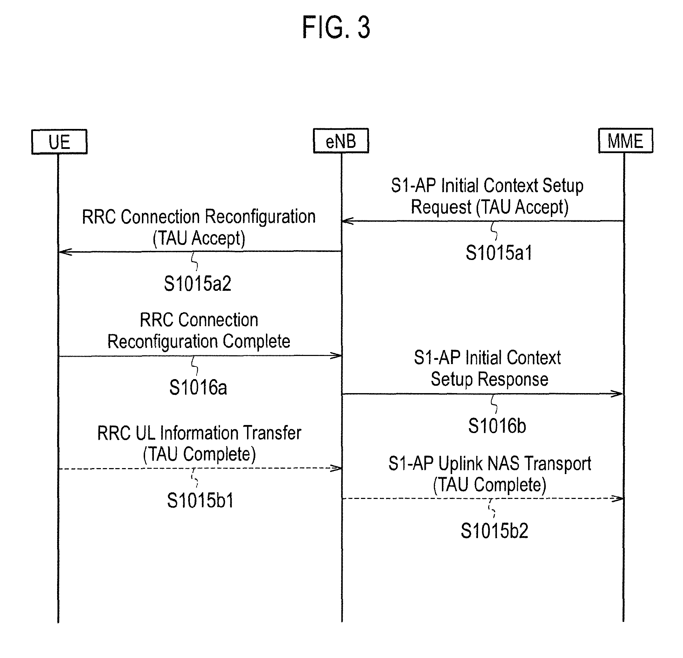

Specifically, as shown in Fig. 3, the MME sends the eNB the "S1-AP Initial Context Setup Request" including the "TAU Accept" in Step S1015a1, and then the eNB sends the UE a "RRC Connection Reconfiguration" including the "TAU Accept" in Step S1015a2.

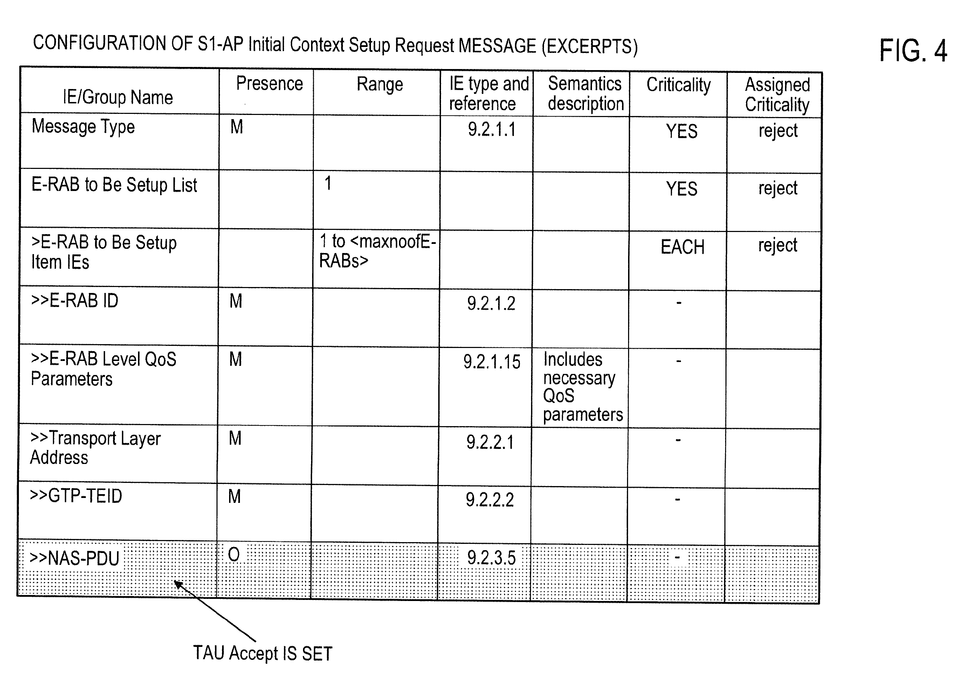

For instance, as shown in Fig. 4, the "TAU Accept" is set in one information element "NAS-PDU" in the "S1-AP Initial Context Setup Request".

Referring back to Fig. 2, in Step S1015b, the UE may send a "TAU Complete" to the MME, or instead may omit the sending of the "TAU Complete".

Specifically, as shown in FIG. 3, the UE sends the eNB a "RRC UL Information Transfer" including the "TAU Complete" in Step S1015b1, and then the eNB sends the MME an "S1-AP Uplink NAS Transport" including the "TAU Complete" in Step S1015b2.

Here, In Step S1012b, if no S1 bearer/E-RAB for the UE is established between the S-GW#2 and the eNB, the S-GW#2 may send the MME a "Downlink Data Notification" for notifying of "RA" transmission, or instead may omit the sending of the "Downlink Data Notification".

The MME performs no particular operation even when receiving the "Downlink Data Notification".

However, in the case where a timer or the like for releasing the NAS signaling connection established between the MME and the UE or for releasing the S1 bearer/E-RAB is in operation, the MME may stop the timer when receiving the "Downlink Data Notification".

In Step S1016, the procedure for establishing the S1 bearer/E-RAB for the UE is carried out.

Specifically, as shown in Fig. 3, upon receiving the "RRC Connection Reconfiguration" including the "TAU Accept", the UE sends the eNB a "RRC Connection Reconfiguration Complete" in Step S1016a. Then, the eNB sends the MME an "S1-AP Initial Context Setup Response" in Step S1016b.

In addition, the MME sends a "Modify Bearer Request" (not illustrated) to the S-GW#2, and the S-GW#2 sends a "Modify Bearer Response" (not illustrated) to the MME.

The establishment of the S1 bearer/E-RAB for the UE is thus finished.

Here, the procedure in Step S1015b and the procedure in Step S1016 in Fig. 2 may be carried out in the order shown in Fig. 2, or instead may be carried out in parallel. Alternatively, the procedure in Step S1016 may be carried out first and the procedure in Step S1015b may be carried out after that.

Referring back to Fig. 2, in Step S1017, the S-GW#2 sends an "RA" to the UE via the S1 bearer/E-RAB for the UE.

According to the mobile communication system of this embodiment, it is possible to send an "RA" without releasing a NAS signaling connection for the UE, in the location registration procedure involving the change of the S-GW for managing a bearer for the UE from the S-GW#1 to the S-GW#2.

### (First Modification)

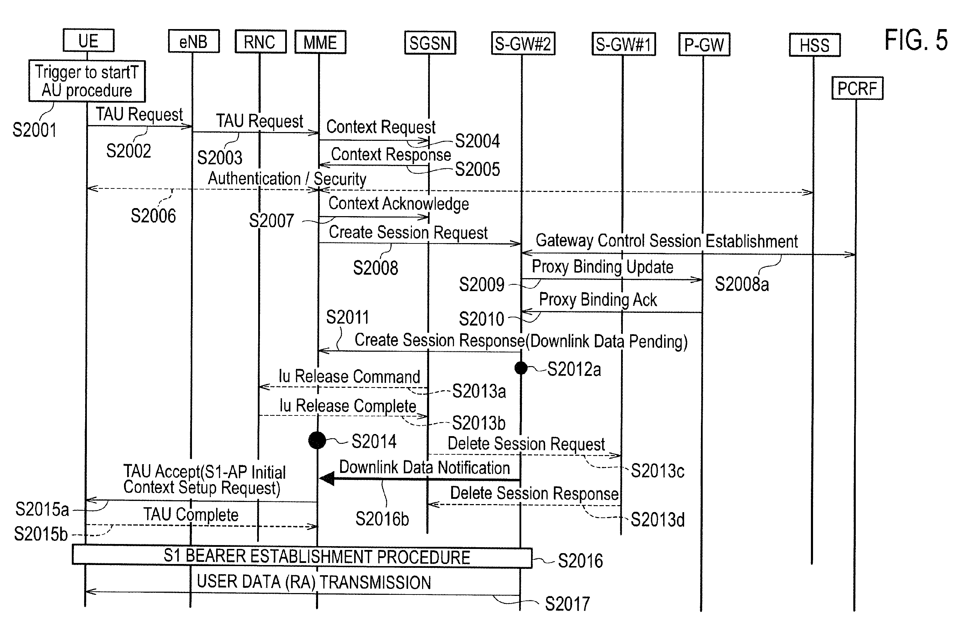

A mobile communication system according to a first modification of the present invention will be described with reference to Fig. 5. The mobile communication system according to the first modification will be described below in terms of the difference from the mobile communication system according to the first embodiment described above.

Note that, in the mobile communication system according to the first modification, the PMIP is employed in the S-GW#2 and the P-GW as in the mobile communication system according to the first embodiment.

With reference to Fig. 5, a description will be given below of an operation of sending an "RA" to the UE in the location registration procedure, which involves the change of the S-GW for managing a bearer for the UE from the S-GW#1 to the S-GW#2, in the mobile communication system according to the first modification.

As shown in Fig. 5, the operation from Step S2001 to Step S2013d is the same as the operation from Step S1001 to S1013d shown in Fig. 2.

In response to the receipt of "Downlink Data Pending", the MME holds a NAS signaling connection established with the UE without releasing the NAS signaling connection in Step S2014. Upon receiving a "Downlink Data Notification" from the S-GW#2 in Step S2016b, the MME determines to establish an S1 bearer/E-RAB for the UE and sends the UE an "S1-AP Initial Context Setup Request" including a "TAU Accept" in Step S2015a.

Here, the S-GW may notify the MME in the "Downlink Data Notification" that this is a notification regarding "RA" transmission.

In addition, the MME may initiate a timer for waiting for receipt of the "Downlink Data Notification" when receiving the "Downlink Data Pending".

If the MME cannot receive the "Downlink Data Notification" before the timer expires, the MME sends the UE a "TAU Accept" not including the "S1-AP Context Setup Request" in Step S2015a.

In this case, after this transmission, the MME may hold the NAS signaling connection for a predetermined period of time, or instead may disconnect the connection immediately.

The following operation from Step S2015a to Step S2017 is the same as the operation from Step S1015a to Step S1017 shown in Fig. 2.

### (Second Modification)

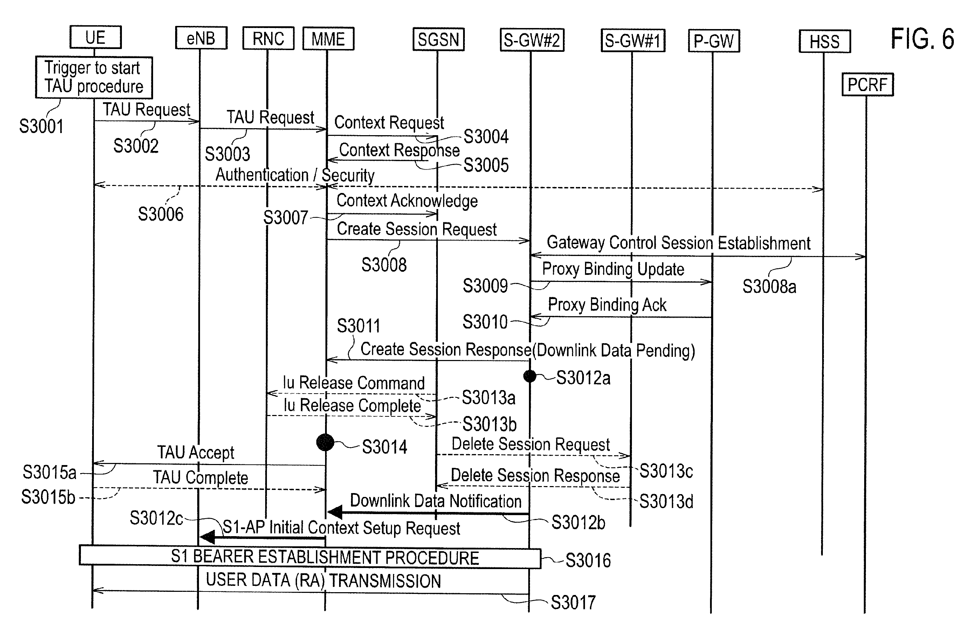

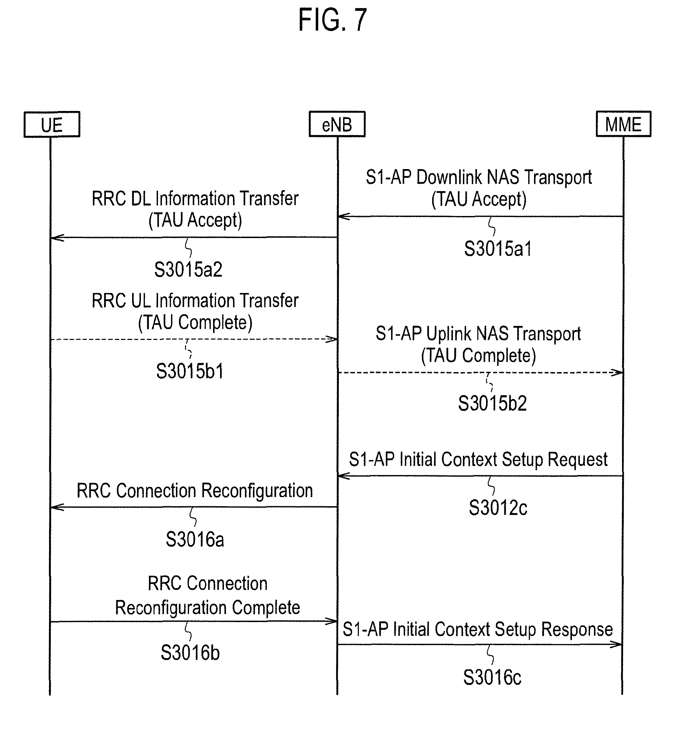

A mobile communication system according to a second modification of the present invention will be described with reference to Figs. 6 and 7. The mobile communication system according to the second modification will be described below in terms of the difference from the mobile communication system according to the first embodiment described above.

Note that, in the mobile communication system according to the second modification, the PMIP is employed in the S-GW#2 and the P-GW as in the mobile communication system according to the first embodiment.

With reference to Figs. 6 and 7, a description will be given below of an operation of sending an "RA" to the UE in the location registration procedure, which involves the change of the S-GW for managing a bearer for the UE from the S-GW#1 to the S-GW#2, in the mobile communication system according to the second modification.

As shown in Fig. 6, the operation from Step S3001 to Step S3013d is the same as the operation from Step S1001 to Step S1013d shown in Fig. 2.

While holding the NAS signaling connection established with the UE without releasing the NAS signaling connection in Step S3014 in response to the receipt of the "Downlink Data Pending", the MME sends a "TAU Accept" to the UE in Step S3015a.

Specifically, as shown in Fig. 7, the MME sends the eNB an "S1-AP Downlink NAS Transport" including the "TAU Accept" in Step S3015a1. Then, the eNB sends the UE a "RRC DL Information Transfer" including the "TAU Accept" in Step S3015a2.

In Step S3015b, the UE may send a "TAU Complete" to the MME, or instead may omit the sending of the "TAU Complete".

Specifically, as shown in Fig. 7, the UE sends the eNB a "RRC UL Information Transfer" including a "TAU Complete" in Step S3015b1. Then, the eNB sends the MME an "S1-AP UL NAS Transport" including the "TAU Complete" in Step S3015b2.

Referring back to Fig. 6, upon receiving a "Downlink Data Notification" for notifying of "RA" transmission from the S-GW#2 in Step S3012b, the MME determines to establish an S1 bearer/E-RAB for the UE and sends the eNB an "S1-AP Initial Context Setup Request" in Step S3012c.

In Step S3016, the procedure for establishment of the S1 bearer/E-RAB for the UE is carried out.

Specifically, as shown in Fig. 7, the MME sends an "S1-AP Initial Context Setup Request" to the eNB in Step S3012c. Then, the eNB sends a "RRC Connection Reconfiguration" to the UE in Step S3016a. In response to the receipt of the "RRC Connection Reconfiguration", the UE sends a "RRC Connection Reconfiguration Complete" to the eNB in Step S3016b. Then, the eNB sends an "S1-AP Initial Context Setup Response" to the MME in Step S3016c.

In addition, the MME sends a "Modify Bearer Request" (not illustrated) to the S-GW#2, and the S-GW#2 sends a "Modify Bearer Response" (not illustrated) to the MME.

The establishment of the S1 bearer/E-RAB for the UE is thus finished.

Here, if the MME receives no "Downlink Data Notification" in Step S3012b within a predetermined period of time after the procedure in Step S3015 is carried out, the MME may release the NAS signaling connection.

### (Third Modification)

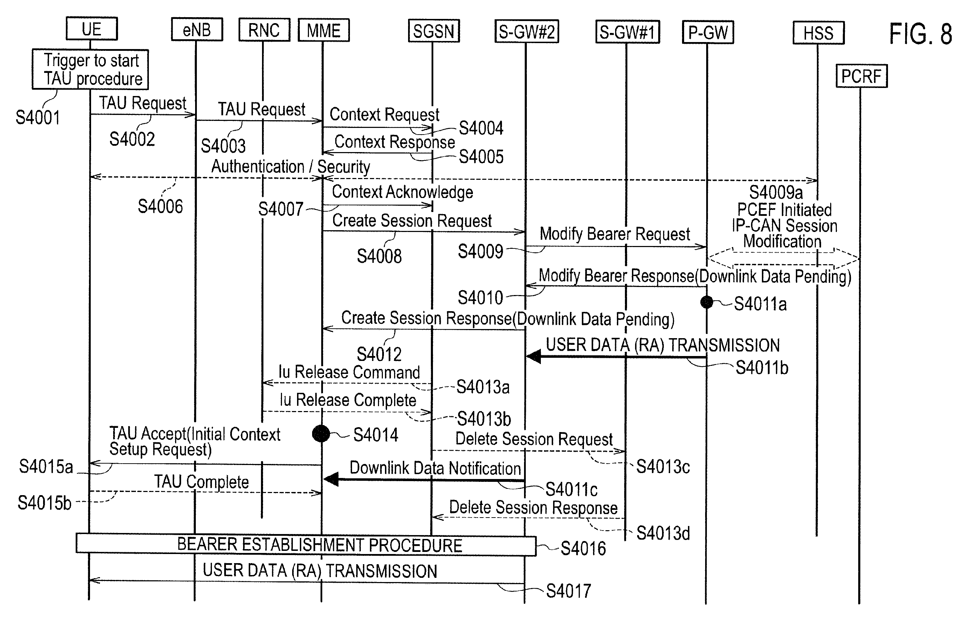

A mobile communication system according to a third modification of the present invention will be described with reference to Fig. 8. The mobile communication system according to the third modification will be described below in terms of the difference from the mobile communication system according to the first embodiment described above.

Note that, in the mobile communication system according to the third modification, the GTP is employed in the S-GW#2 and the P-GW unlike in the mobile communication system according to the first embodiment.

With reference to Fig. 8, a description will be given below of an operation of sending an "RA" to the UE in the location registration procedure, which involves the change of the S-GW for managing a bearer for the UE from the S-GW#1 to the S-GW#2, in the mobile communication system according to the third modification.

As shown in Fig. 8, the operation from Step S4001 to Step S4008 is the same as the operation from Step S1001 to S1008 shown in Fig. 2.

In Step S4009, the S-GW#2 sends a "Modify Bearer Request" to the P-GW. In Step S4009a, the P-GW performs the "PCEF Initiated IP-CAN Session Modification procedure" with the PCRF.

The P-GW sends the S-GW#2 a "Modify Bearer Response" including "Downlink Data Pending" in Step S4010, and starts the "RA" transmission procedure in Step S4011a.

In Step S4012, the S-GW#2 sends a "Create Session Response" including the "Downlink Data Pending".

The operation from Step S4013a to Step S4016 is the same as the operation from Step S1013a to S1016 shown in Fig. 2.

Here, if no S1 bearer/E-RAB is established between the S-GW#2 and the eNB when the S-GW#2 receives an "RA" from the P-GW in Step S4011b, the S-GW#2 may send the MME a "Downlink Data Notification" for notifying of "RA" transmission in Step S4011c, or instead may omit the sending of the "Downlink Data Notification".

The MME performs no particular operation even when receiving the "Downlink Data Notification".

However, in the case where a timer or the like for releasing the NAS signaling connection established between the MME and the UE or for releasing the S1 bearer/E-RAB is in operation, the MME may stop the timer when receiving the "Downlink Data Notification".

In Step S4017, the S-GW#2 sends the "RA", which has been received from the P-GW, to the UE via the S1 bearer/E-RAB for the UE.

### (Fourth Modification)

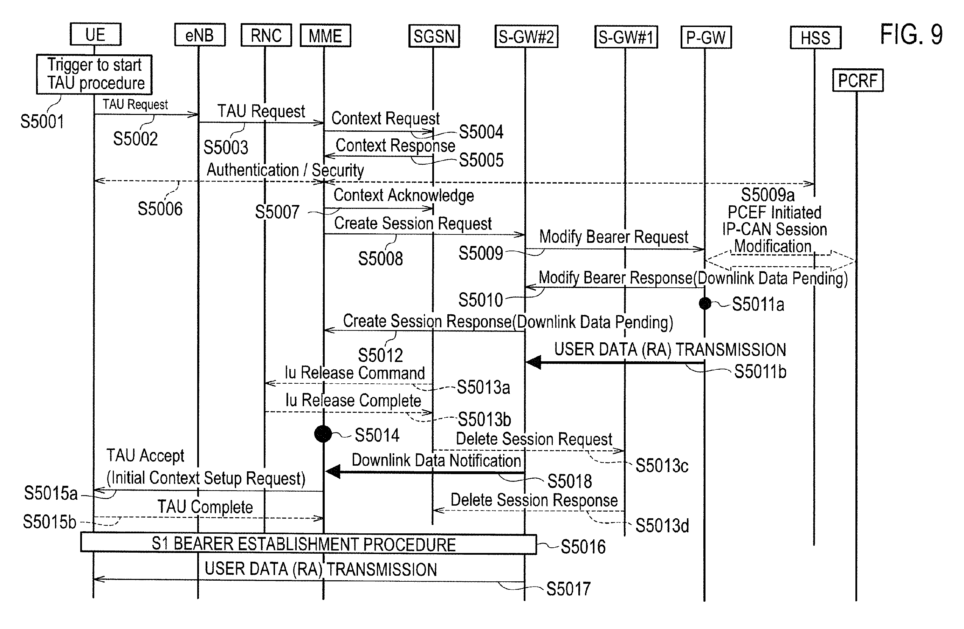

A mobile communication system according to a fourth modification of the present invention will be described with reference to Fig. 9. The mobile communication system according to the fourth modification will be described below in terms of the difference from the mobile communication system according to the third modification described above.

Note that, in the mobile communication system according to the fourth modification, the GTP is employed in the S-GW#2 and the P-GW as in the mobile communication system according to the third modification.

With reference to Fig. 9, a description will be given below of an operation of sending an "RA" to the UE in the location registration procedure, which involves the change of the S-GW for managing a bearer for the UE from the S-GW#1 to the S-GW#2, in the mobile communication system according to the fourth modification.

As shown in Fig. 9, the operation from Step S5001 to Step S5013d is the same as the operation from Step S4001 to Step S4013d shown in Fig. 8.

In response to the receipt of "Downlink Data Pending", the MME holds a NAS signaling connection established with the UE without releasing the NAS signaling connection in Step S5014. Upon receiving a "Downlink Data Notification" from the S-GW#2 in Step S5018, the MME determines to establish an S1 bearer/E-RAB for the UE and sends the UE an "S1-AP Initial Context Setup Request" including a "TAU Accept" in Step S5015a.

Here, the S-GW may notify the MME in the "Downlink Data Notification" that this is a notification regarding "RA" transmission.

In addition, the MME may initiate a timer for waiting for receipt of the "Downlink Data Notification" when receiving the "Downlink Data Pending".

If the MME cannot receive the "Downlink Data Notification" before the timer expires, the MME sends the UE a "TAU Accept" not including the "S1-AP Context Setup Request" in Step S5015a.

In this case, after this transmission, the MME may hold the NAS signaling connection for a predetermined period of time, or instead may disconnect the connection immediately.

The following operation from Step S5015a to Step S5017 is the same as the operation from Step S4015a to Step S4017 shown in Fig. 8.

### (Fifth Modification)

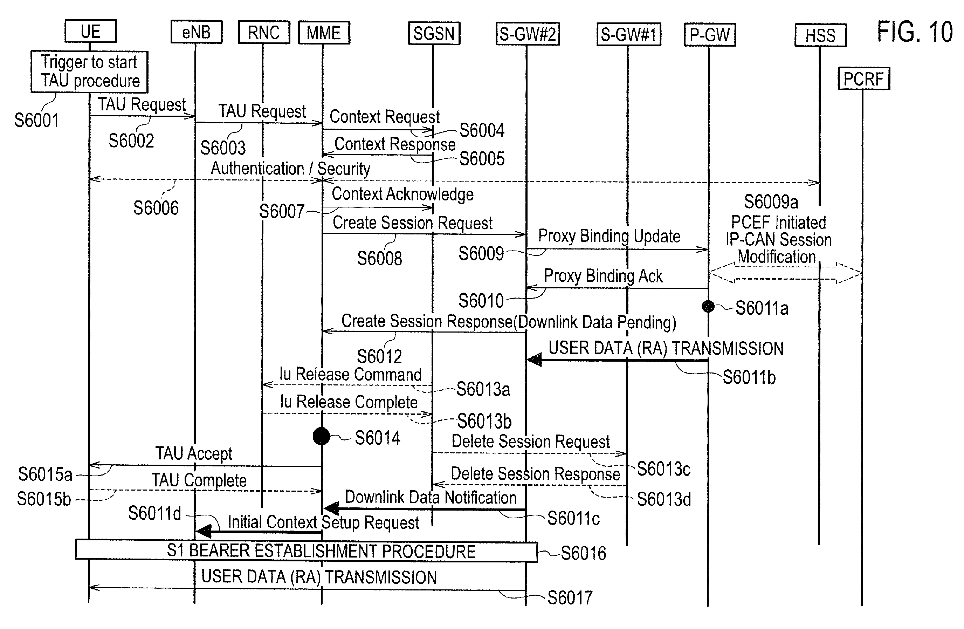

A mobile communication system according to a fifth modification of the present invention will be described with reference to Fig. 10. The mobile communication system according to the fifth modification will be described below in terms of the difference from the mobile communication systems according to the second and third modifications described above.

Note that, in the mobile communication system according to the fifth modification, the GTP is employed in the S-GW#2 and the P-GW as in the mobile communication system according to the third modification.

With reference to Fig. 10, a description will be given below of an operation of sending an "RA" to the UE in the location registration procedure, which involves the change of the S-GW for managing a bearer for the UE from the S-GW#1 to the S-GW#2, in the mobile communication system according to the fifth modification.

As shown in Fig. 10, the operation from Step S6001 to Step S6013d is the same as the operation from Step S4001 to Step S4013d shown in Fig. 8.

While holding a NAS signaling connection established with the UE without releasing the NAS signaling connection in Step S6014 in response to the receipt of "Downlink Data Pending", the MME sends a "TAU Accept" to the UE in Step S6015a.

Here, the operation in Step S6015a and Step S6015b is the same as the operation in Step S3015a and Step S3015b shown in Fig. 6.

Upon receiving a "Downlink Data Notification" for notifying of "RA" transmission from the S-GW#2 in Step S6011c, the MME determines to establish an S1 bearer/E-RAB for the UE and sends the eNB an "S1-AP Initial Context Setup Request" in Step S6011d.

In Step S6016, the procedure for establishment of the S1 bearer/E-RAB for the UE is carried out.

Here, the operation in Step S6016 and Step S6017 is the same as the operation in Step S3016 and Step S3017 shown in Fig. 6.

The characteristics of this embodiment described above may be expressed in the following way.

A first characteristic of this embodiment is a mobile communication method for sending a UE (mobile station) an "RA" (notification signal for notifying of information on an IP address to be allocated to the mobile station) in a location registration procedure involving a change of a S-GW for managing a bearer for the UE (such as an S1 bearer/E-RAB and a user data bearer) from a S-GW#1 (first serving gateway) to a S-GW#2 (second serving gateway). The gist of the mobile communication method is to include: a step A of causing the S-GW#2 to send "Downlink Data Pending (predetermined information)" to a MME (core network device) in a procedure for the S-GW#2 to establish a user data bearer (first user bearer) for the UE with a P-GW (packet data network gateway) ; a step B of causing the MME to send an "S1-AP Initial Context Setup Request (establishment request signal)" for requesting establishment of an S1 bearer/E-RAB (second user bearer) for the UE between the S-GW#2 and an eNB (radio access network device) under the control of the S-GW#2 while holding a NAS signaling connection (control bearer) established with the UE without releasing the NAS signaling connection, when the MME receives the "Downlink Data Pending"; and a step C of causing the S-GW#2 to send the "RA" to the UE via the S1 bearer/E-RAB for the UE.

In the first characteristic of this embodiment, in the step C, the S-GW#2 may send the "RA", which has been received from the P-GW, to the UE via the S1 bearer/E-RAB for the UE.

A second characteristic of this embodiment is a mobile communication method for sending a UE an "RA" in a location registration procedure involving a change of an S-GW for managing a bearer for the UE from an S-GW#1 to an S-GW#2. The gist of the mobile communication method is to include: a step A of causing the S-GW#2 to send "Downlink Data Pending" to a MME in a procedure for the S-GW#2 to establish a user data bearer for the UE with a P-GW; a step B of causing the MME to hold a NAS signaling connection established with the UE without releasing the NAS signaling connection when receiving the "Downlink Data Pending"; a step C of causing the S-GW#2 to send a "Downlink Data Notification (downlink data notification signal)" to the MME if no S1 bearer/E-RAB for the UE is established between the S-GW#2 and an eNB under the control of the S-GW#2; a step D of causing the MME to send an "S1-AP Initial Context Setup Request" for requesting establishment of the S1 bearer/E-RAB for the UE when receiving the "Downlink Data Notification"; and a step E of causing the S-GW#2 to send the "RA" to the UE via the S1 bearer/E-RAB for the UE.

In the second characteristic of this embodiment, in the step E, the S-GW#2 may send the "RA", which has been received from the P-GW, to the UE via the S1 bearer/E-RAB for the UE.

Note that the operations of the UE, the eNB, the RNC, the MME, the SGSN, the S-GW#1, the S-GW#2, the P-GW, the PCRF, the HSS, and the like described above may be implemented by means of hardware, a software module executed by a processor, or a combination of both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Alternatively, the storage medium may be integrated into the processor. In addition, the storage medium and the processor may be provided in an ASIC. The ASIC may be provided in the UE, the eNB, the RNC, the MME, the SGSN, the S-GW#1, the S-GW#2, the P-GW, the PCRF, the HSS, and the like. Alternatively, the storage medium and the processor may be provided in the UE, the eNB, the RNC, the MME, the SGSN, the S-GW#1, the S-GW#2, the P-GW, the PCRF, the HSS, and the like as a discrete component.

Hereinabove, the present invention has been described in detail using the embodiment described above; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

Note that the entire content of Japanese Patent Application No. 2011-066092 (filed on March 24, 2011) is incorporated herein by reference.

### INDUSTRIAL APPLICABILITY

As described above, the present invention can provide a mobile communication method capable of preventing a "Paging" from being induced in the case of transmission of an "RA" to a UE triggered by access from the UE and thereby performing effective "RA" transmission.

### EXPLANATION OF THE REFERENCE NUMERALS

- UE: mobile station
- eNB: radio base station
- RNC: radio network controller
- MME: mobility management node
- SGSN: packet switch
- S-GW#1, S-GW#2: serving gateway
- P-GW: packet data network gateway
- PCRF: policy and charging rules server
- HSS: subscriber management server

## Claims

1. A mobile communication method for sending a mobile station a notification signal for notifying of information on an IP address to be allocated to the mobile station in a location registration procedure of the mobile station involving a change of a serving gateway for managing a bearer for the mobile station from a first serving gateway to a second serving gateway, the method comprising:
a step A of causing the second serving gateway to send predetermined information to a core network device connected to the second serving gateway in a procedure for the second serving gateway to establish a first user bearer for the mobile station with a packet data network gateway;
a step B of causing the core network device to send an establishment request signal for requesting establishment of a second user bearer for the mobile station between the second serving gateway and a radio access network device under the control of the second serving gateway while holding a control bearer established with the mobile station without releasing the control bearer, when the core network device receives the predetermined information; and
a step C of causing the second serving gateway to send the notification signal to the mobile station via the second user bearer.

2. The mobile communication method according to claim 1, wherein, in the step C, the second serving gateway sends the notification signal, which has been received from the packet data network gateway, to the mobile station via the second user bearer.

3. A mobile communication method for sending a mobile station a notification signal for notifying of information on an IP address to be allocated to the mobile station in a location registration procedure of the mobile station involving a change of a serving gateway for managing a bearer for the mobile station from a first serving gateway to a second serving gateway, the method comprising:
a step A of causing the second serving gateway to send predetermined information to a core network device connected to the second serving gateway in a procedure for the second serving gateway to establish a first user bearer for the mobile station with a packet data network gateway;
a step B of causing the core network device to hold a control bearer established with the mobile station without releasing the control bearer when receiving the predetermined information;
a step C of causing the second serving gateway to send a downlink data notification signal to the core network device if no second user bearer for the mobile station is established between the second serving gateway and a radio access network device under the control of the second serving gateway;
a step D of causing the core network device to send an establishment request signal for requesting establishment of the second user bearer when receiving the downlink data notification signal; and
a step E of causing the second serving gateway to send the notification signal to the mobile station via the second user bearer.

4. The mobile communication method according to claim 3, wherein, in the step E, the second serving gateway sends the notification signal, which has been received from the packet data network gateway, to the mobile station via the second user bearer.
